# EUROPEAN PATENT APPLICATION

(11) **EP 2 728 191 A1**
(43) Date of publication of application: **07.05.2014**
(21) Application number: 12803836.1
(22) Date of filing: 31.05.2012
(51) Int. Cl.: F04C 18/344

(54) **VANE COMPRESSOR**

(30) Priority: 28.06.2011 JP 2011142876; 17.02.2012 JP 2012032549
(71) Applicant: Calsonic Kansei Corporation, Saitama-shi, Saitama 331-8501 (JP)
(72) Inventor: OSAKI, Tatsuya, Saitama-shi Saitama 331-8501 (JP); TSUDA, Masahiro, Saitama-shi Saitama 331-8501 (JP); SHIMAGUCHI, Hirotada, Saitama-shi Saitama 331-8501 (JP); MIYAJI, Toshikatsu, Saitama-shi Saitama 331-8501 (JP); HIRONO, Kouji, Saitama-shi Saitama 331-8501 (JP)
(74) Representative: Grünecker, Kinkeldey, Stockmair & Schwanhäusser
(86) International application number: PCT/JP2012/064155
(87) International publication number: WO 2013/001977

(57) **Abstract**

A rotor of a vane compressor includes a rotor main body that rotates in a cylinder chamber, vanes that reciprocates in vane slots formed in the rotor main body, coil springs that urge the vanes toward the oval inner wall, and guide members each of which has a press-in end pressed into a bottom of the vane and an accommodated end to be accommodated in an escape hole provided on a bottom of the vane slot and is inserted into the coil spring to prevent the coil spring from bending. When an outer diameter of the guide member is denoted by *a*, an inner diameter of the coil spring is denoted by *b1*, an outer diameter thereof is denoted by b2, and an inner diameter an accommodation hole for the coil spring is denoted by c, an inequality (b1-a)< (c-b2) is satisfied. A first seating diameter of an end (a first contact portion) of the coil spring on a side of the accommodated end is larger than a second seating diameter of an end (a second contact portion) of the coil spring on a side of the press-in end. According to the compressor, contacts between the accommodation hole and the guide member can be prevented even when the accommodation hole for the guide member is formed without high accuracy.

## Description

### TECHNICAL FIELD

The present invention relates to a vane compressor in which compression chambers are formed in a cylinder chamber by vanes provided on a rotor that rotates in the cylinder chamber and that compresses refrigerant in the compression chambers.

### BACKGROUND ART

In a vane compressor, a cylinder chamber having an oval inner wall is formed in a cylinder block, and a rotatable rotor is disposed in the cylinder chamber. Plural vane slots are formed on an outer circumferential surface of the rotor, and vanes are inserted reciprocatably in the vane slots, respectively. The vanes are protruded from the vane slots so as to be slidably contacted with the oval inner wall of the cylinder chamber, and thereby segment the cylinder chamber into plural compression chambers. Refrigerant is compressed by utilizing volume changes of the compression chambers along with rotations of the rotor. Since it is required to make the vanes protruded from the vane slots, backpressure is applied to the vanes. In addition, when protruding the vanes from the vane slots, it is required to prevent noises due to impacts of the vanes onto the oval inner wall (hereinafter, referred as chattering).

In a gas compressor disclosed in a Patent Document 1 listed below, chattering of vanes is prevented by connecting a high-pressure supply passage in addition to a normal backpressure supply passage in order to apply oil pressure other than normal backpressure. However, chattering of vanes may occur in a state where the oil pressure is not raised sufficiently, such as at a start-up time of the compressor.

In a vane pump disclosed in a Patent Document 2 listed below, a coil spring(s) is disposed between a bottom surface of a vane (s) and a bottom of a vane slot(s), and thereby chattering is prevented by pushing the vane by the coil spring in addition to the above-mentioned backpressure. In the vane pump disclosed in the Patent Document 2, chattering can be prevented more stably than in the gas compressor disclosed in the Patent Document 1.

Note that, in the vane pump disclosed in the Patent Document 2, a guide pin (guide member) that is shorter than an expanding length of the coil spring is inserted into the coil spring in order to prevent bending of the coil spring when compressed. One end of the guide pin is fixed to the bottom of the vane slot, and another end is inserted into the vane. In this configuration, an accommodation hole(s) for accommodating the guide pin and the coil spring is formed on the vane. Alternatively, one end of the guide pin is fixed to the vane, and another end is inserted into the vane slot. In this configuration, an accommodation hole (s) for accommodating the guide pin and the coil spring is formed on the rotor.

### Prior Art Document

### Patent Documents

Patent Document 1: Japanese Patent Unexamined Application Publication No. 2007-100602
Patent Document 2: Japanese Examined Utility Model Application Publication No. H8-538

### SUMMARY OF INVENTION

Chattering can be prevented more surely by the vane pump disclosed in the Patent Document 2 than the gas compressor disclosed in the Patent Document 1, but inclination of the vane in the vane slot and contacts of an end of the guide pin with an inner surface of the accommodation hole may occur and thereby the inner surface of the accommodation hole may be damaged. It is required to form the accommodation hole with high accuracy in order to prevent the guide pin from bring contacted with the accommodation hole, but the bottom surface of the vane or the bottom of the vane slot on which the accommodation hole is formed is small and thereby accuracy improvement is difficult. In addition, production costs may increase in order to obtain accuracy improvement.

An object of the present invention is to provide a vane compressor that can prevent a guide member from being contacted with an inner surface of an accommodation hole without forming the accommodation hole for the guide member with high accuracy, and can form the accommodation hole at low costs.

An aspect of the present invention provides a vane compressor comprising: a cylinder block in which a cylinder chamber having an oval inner wall on an inner surface thereof is formed; and a rotor rotatably provided in the cylinder chamber, wherein the rotor includes a rotor main body that rotates in the cylinder chamber, a plurality of vanes whose base ends are supported by a plurality of vane slots formed in the rotor main body and that are provided so as to be able to protrude from the rotor main body, coil springs disposed between bottoms of the vane slots and the vanes to urge the vanes toward the oval inner wall, and guide members each of which has a press-in end that is pressed into a bottom of one of the vane and the vane slot and an accommodated end that is to be accommodated in an escape hole provided on a bottom of another of the vane and the vane slot, and is inserted into the coil spring to prevent the coil spring from bending, when an outer diameter of the guide member is denoted by a, an inner diameter of the coil spring is denoted by *b1*, an outer diameter of the coil spring is denoted by b2, and an inner diameter or an inner width of an accommodation portion for the coil spring is denoted by c, an inequality (b1-a)<(c-b2) is satisfied, and a first seating diameter of a first contact portion at an end of the coil spring on a side of the accommodated end is larger than a second seating diameter of a second contact portion at another end of the coil spring on a side of the press-in end.

Inclination of the guide member is less predominant on the side of the press-in end where the guide member is pressed-in than on the side of the accommodation end opposite thereto. Since the guide member is disposed in the coil spring and the radially-enlarged portion is provided by making the seating diameter of the end of the coil spring on the side of the accommodation end of the guide member larger than the seating diameter of the other end of the coil spring on the side of the press-in end of the guide member in the invention according to claim 1, the coil spring can be prevented from intruding into the escape hole when the escape hole is enlarged in order to prevent the guiding member from being contacted with the escape hole. In addition, the coil spring is restricted from bending because an inner side of the coil spring may be contacted with the guide member when the coil spring bends and bustles. This can prevent the escape hole (accommodation hole) from being damaged. Therefore, high-accuracy forming of the escape hole (accommodation hole) and accuracy improvement are not needed and thereby the escape hole (accommodation hole) can be formed at low costs.

Here, it is preferable that an outer diameter of the first contact portion is larger than an outer diameter of the second contact portion.

According to this, it becomes possible to make the seating diameter of the first contact portion larger than the seating diameter of the second contact portion with a simple configuration.

Further, it is preferable that the coil spring has a radially-enlarged portion whose outer diameter is gradually enlarged along a direction from the second contact portion to the first contact portion.

According to this, it becomes possible to make the seating diameter of the first contact portion larger than the seating diameter of the second contact portion with a simple configuration while preventing stress concentration.

Furthermore, it is preferable that the number of active coils in the radially-enlarged portion is set so that shear stress of the radially-enlarged portion of the coil spring is made equivalent-to or smaller-than shear stress of a coiled portion that is a portion of the coil spring other than the radially-enlarged portion.

According to this, a load is applied to one of the radially-enlarged portion and the coiled portion more than another of them, so that the one can be prevented from being damaged.

In addition, it is preferable that pitch of the radially-enlarged portion is smaller than pitch of the coiled portion.

According to this, a load is applied to one of the radially-enlarged portion and the coiled portion more than another of them, so that the one can be prevented from being damaged.

In addition, it is preferable that coils in the radially-enlarged portion are contacted with each other.

According to this, a load is applied to one of the radially-enlarged portion and the coiled portion more than another of them, so that the one can be prevented from being damaged.

In addition, it is preferable that the first contact portion has a washer, and an outer diameter of the washer is the seating diameter.

According to this, it becomes possible to make the seating diameter of the first contact portion larger than the seating diameter of the second contact portion with a simple configuration.

### BRIEF DESCRIPTION OF DRAWINGS

**[****Fig. 1****]** It is a cross-sectional view of a first embodiment of an electrical compressor including a vane compressor.
**[****Fig. 2****]** It is a partial cross-sectional view of an inside of a cylinder chamber in the first embodiment.
**[****Fig. 3****]** It is an enlarged cross-sectional view showing a coil spring and an accommodation hole.
**[****Fig. 4****]** (a) is a side view of the coil spring when expands, and (b) is a side view of the coil spring when compressed.
**[****Fig. 5****]** (a) is a cross-sectional view showing an environment of coil springs (compressed) in a second embodiment of a vane compressor, and (a) is a cross-sectional view showing the environment of the coil springs (expanding).
**[****Fig. 6****]** (a) is a cross-sectional view taken along a line VIA - VIA shown in Fig. 5(a), and (b) is a cross-sectional view taken along a line VIB - VIB shown in Fig. 5(b).
**[****Fig. 7****]** (a) is a side view of a coil spring when expands in a third embodiment of a vane compressor, and (b) is a side view of the coil spring when compressed.
**[****Fig. 8****]** (a) is a side view of a coil spring when expands in a fourth embodiment of a vane compressor, and (b) is a side view of the coil spring when compressed.
**[****Fig. 9****]** (a) is a side view of a coil spring when expands in a fifth embodiment of a vane compressor, and (b) is a side view of the coil spring when compressed.
**[****Fig. 10****]** (a) is a side view of a coil spring when expands in a sixth embodiment of a vane compressor, and (b) is a side view of the coil spring when compressed.

### DESCRIPTION OF EMBODIMENTS

### [First Embodiment]

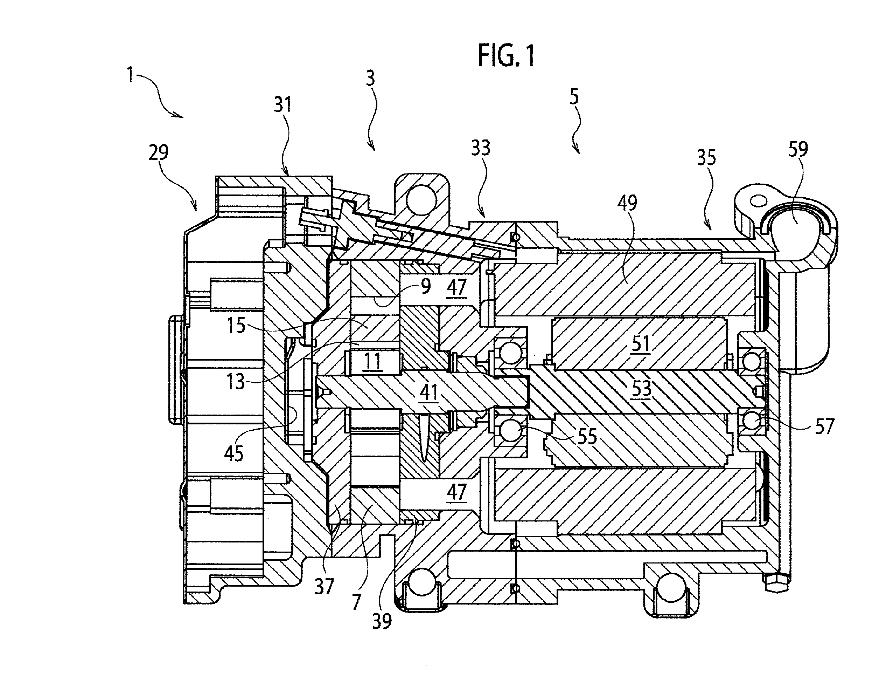

A first embodiment will be explained with reference to Fig. 1 to Fig. 4(b).

As shown in Fig. 1, an electrical compressor 1 includes a vane compressor 3 and an electrical motor 5 for driving the vane compressor 3. The electrical compressor 1 is used for a cooling system of an air-conditioner for a vehicle. In this cooling system, high-temperature and high-pressure refrigerant that is adiabatically compressed by the electrical compressor 1 is liquidized by a condenser. The liquidized refrigerant is expanded by an expansion valve, and generates cool air by heat exchange at an evaporator. The refrigerant is heated at the evaporator to be evaporated. The evaporated refrigerant is returned to the compressor 1 again to be adiabatically compressed. Refrigerant discharge volume of the compressor 1 (3) is adjusted according to changes of a thermal load to the cooling system and so on. Lubrication oil is contained in the refrigerant for lubrication in any part of the compressor 1 (3).

The electrical compressor 1 includes a front housing 31, a middle housing 33 and a rear housing 35. These housings 31, 33 and 35 are coupled with each other by bolts. In addition, the vane compressor 3, the electrical motor 5 and a drive circuit 29 are provided inside the housings 31, 33 and 35. The vane compressor 3 is housed in the middle housing 33, the electrical motor 5 is housed in the rear housing 35, and the drive circuit 29 is housed in the front housing 31. The drive circuit 29 controls revolving speed of the electrical motor 5.

The electrical motor 5 includes a stator 49, a rotor 51 formed of magnetic material, and a motor shaft 53. The stator 49 has nine stator teeth, and a coil is wound around each of the teeth. The stator teeth and the coils are aligned along a circumferential direction of the rear housing 35. The motor shaft 53 is pressed-into and fixed-with the rotor 51. An end (a left end in Fig. 1) of the motor shaft 53 is spline-coupled with a rotor shaft 41 of the vane compressor 3, and supported by the middle housing 33 via a ball bearing 55 together with the rotor shaft 41. On the other hand, another end (a right end in Fig. 1) of the motor shaft 53 is supported by the rear housing 35 via a ball bearing 57.

Rotations of the electrical motor 5 are transmitted from the motor shaft 53 to the rotor shaft 41 to drive the vane compressor 3. The vane compressor 3 compresses refrigerant, and the compressed refrigerant is introduced into an inside of the electrical motor 5 via discharge ports 47 to cool the stator 49 and then discharged from a discharge port 59 of the rear housing 35 after oil is separated by an oil separator.

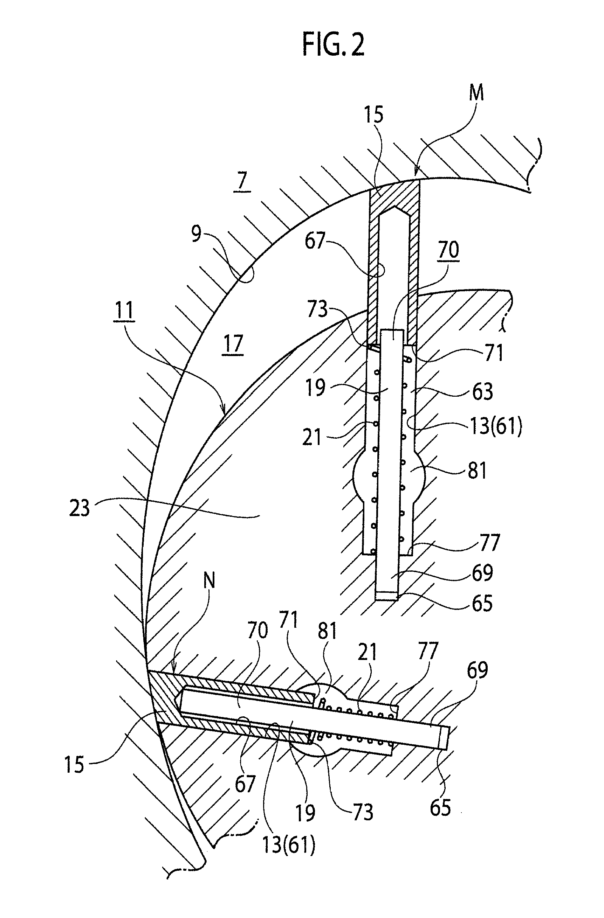

In Fig. 2, an arrow M indicates a vane 15 in a state where its protrusion amount from a vane slot 13 is maximum, and an arrow N indicates a state where an entire of a vane 15 is accommodated in a vane slot 13.

As shown in Fig. 1 and Fig. 2, the vane compressor 3 includes a rotor 11, plural vanes 15, a cylinder block 7, a front block 37, a rear block 39, and the rotor shaft 41. The cylinder block 7, the front block 37 and the rear block 39 are fixed with the middle housing 33 by bolts. One end (a left end in Fig. 1) of the rotor shaft 41 is rotatably supported by the front block 37. A middle of the rotor shaft 41 is rotatably supported by the rear block 39. The rotor 11 has a rotor main body 23 that is spline-coupled with the rotor shaft 41. The rotor main body 23 rotates in the cylinder chamber 17 along with rotations of the rotor shaft 41. An inner surface of the cylinder chamber 17 inside the cylinder block 7 is formed as an oval inner wall 9, and the center of the rotor 11 and the center of the oval inner wall 9 are coincided with each other.

Plural vane slots 13 are formed on an outer circumferential surface of the rotor main body 23 at even intervals along a circumferential direction. A vane 15 is reciprocatably inserted in each of the vane slots 13. The vane(s) 15 protrudes from the vane slot(s) 13, and an end of the vane 15 is contacted with the oval inner wall 9 to segment the cylinder chamber 17 into plural compression chambers. Refrigerant is compressed by volume changes of the compression chambers along with rotations of the rotor 11.

In addition to the vane 15, a pair of guide pins (guide members) 19 and a pair of coil springs 21 are accommodated in each of the vane slots 13. The vane slot (s) 13 in the present embodiment is a storage hole 61 for accommodating the guide pins 19 and the coil springs 21.

The coil springs 21 urges the vane 15 toward the oval inner wall 9. One end of the coil spring (s) 21 is contacted with a base end surface of the vane 15. The base end surface of the vane 15 that is contacted with the one end of the coil spring(s) 21 is a first seat surface 71. The one end of the coil spring (s) 21 that is contacted with the first seat surface 71 is a first contact portion 73.

The guide pin (s) 19 is inserted into the coil spring 21, and prevents the coil spring 21 from bending. Therefore, serpentine flection of the coil spring 21 caused by its bending can be prevented. The guide pin 19 is longer than the expanding guide pin 19 (maximum length when installed), so that it can guide expansions and compressions of the coil spring 21 consistently.

The accommodation hole 61 (vane slot 13) is formed of a storage portion 63 that is located on an outer circumferential side of the rotor main body 23 and accommodates the vane 15 so as to enable it to protrude, a press-in portion 65 that is located at a bottom side thereof and communicates with the accommodation portion 63, and an escape hole 67 formed in the vane 15 so as to communicate with the accommodation portion 63. While the vane 15 reciprocates, the guide pin 19 is inserted-into and drawn-from the escape hole 67. The guide pin 19 never avoids reciprocation of the vane 15 by the insertion/drawing of the guide pin 19 into/from the escape hole 67 during the reciprocations of the vane 15.

A base end of the guide pin 19 is pressed into the press-in portion 65. The base end of the guide pin 19 that is pressed into the press-in portion 65 is a press-in end 69. The guide pin 19 is fixed to the bottom of the vane slot 13 by pressing the press-in end 69 into the press-in portion 65. An inner diameter of the press-in portion 65 is smaller than an inner width of the accommodation portion 63, and a step between an inner surface of the accommodation portion 63 and an inner surface of the press-in portion 65 is a second seat surface 77 that receives another end of the coil spring 21. The other end of the coil spring 21 that is contacted with the second seat surface 77 is a second contact portion 79. On the other hand, an opposite end of the guide pin 19 to the press-in end 69 is a stored end 70 that is inserted-into and drawn-from the escape hole 67.

A high-pressure refrigerant supply passage 81 is formed in the accommodation hole 61 (vane slot 13). High-pressure refrigerant supplied through the high-pressure refrigerant supply passage 81 is applied to the vane 15 as backpressure.

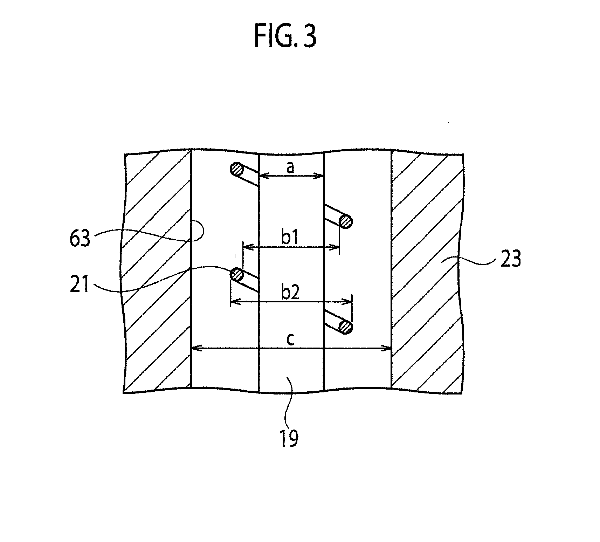

As shown in Fig. 3, when an outer diameter of the guide pin 19 is denoted by *a*, an inner diameter of the coil spring 21 is denoted by *b1*, an outer diameter of the coil spring 21 is denoted by b2, and an inner diameter of the accommodation portion 63 in the accommodation hole 61 (vane slot 13) is denoted by c, an inequality (bl-a)<(c-b2) is satisfied. From the satisfaction of this relation, serpentine flection of the coil spring 21 can be prevented even when the coil spring 21 bends and thereby an inner side of the coil spring 21 is contacted with an outer side of the guide pin 19. However, the coil spring 21 is not contacted with the inner surface of the accommodation portion 63 (accommodation hole 61), so that the coil spring 21 can expand smoothly and can be compressed smoothly.

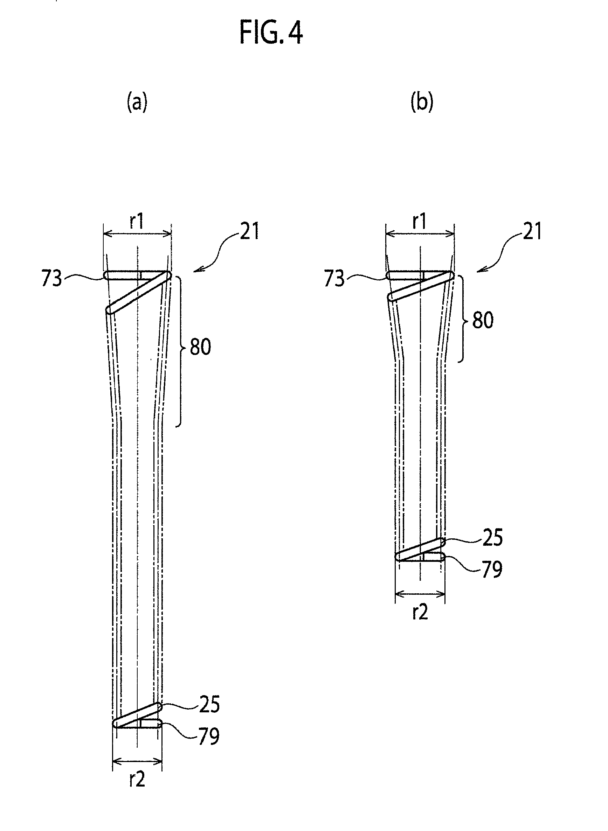

As shown in Fig. 4(a) and Fig. 4(b), the first contact portion 73 contacted with the first seat surface 71 of the vane 15 is formed at the one end of the coil spring 21, and the second contact portion 79 contacted with the second seat surface 77 of the accommodation hole 61 is formed at the other end. In the present embodiment, formed is a radially-enlarged portion 80 whose outer diameter is gradually enlarged along a direction from the second contact portion 79 to the first contact portion 73. The above-explained first contact portion 73 is formed at a free end of the radially-enlarged portion 80. Therefore, an outer diameter of the first contact portion 73 is larger than an outer diameter of the second contact portion 79. Namely, in the coil spring 21, formed is the radially-enlarged portion 80 whose outer diameter is gradually enlarged along a direction from the press-in end 69 to the accommodated end 70 of the guide pin 19.

In this configuration, a seating diameter *r1* of the first contact portion 73 on a side of the accommodated end 70 of the guide pin 19 is larger than a seating diameter r2 of the second contact portion 79 on a side of the press-in end 69 of the guide pin 19 (r1>r2). In addition, since the seating diameter *r1* of the first contact portion 73 is larger than the seating diameter *r2* of the second contact portion 79, intrusion of the coil spring 21 into the escape hole 67 can be prevented even if the escape hole 67 is enlarged in order to prevent the guide pin 19 from being contacted with the escape hole 67.

The rotor shaft 41 of the vane compressor 3 rotates when the motor shaft 53 of the electrical motor 5 is rotated, so that the rotor main body 23 rotates in the cylinder chamber 17. The vane(s) 15 is urged toward the oval inner wall 9 of the cylinder chamber 17 by the coil springs 21, and thereby reciprocated while contacting its end with the oval inner wall 9. Refrigerant is compressed by volume change of the compression chamber between the neighboring vanes 15. When the refrigerant is compressed, the high-pressure refrigerant is supplied into the accommodation hole 61 (vane slot 13) via the high-pressure refrigerant supply passage 81. After the supply of the high-pressure refrigerant, the vane (s) 15 is urged toward the oval inner wall 9 also by backpressure caused by the high-pressure refrigerant in addition to spring forces of the coil springs 21. Therefore, chattering can be prevented even at a compression start time when the backpressure caused by the high-pressure refrigerant is not applied, because the spring forces of the coil springs 21 are applied to the vane 15.

In the present embodiment, the seating diameter *r1* of the first contact portion 73 of the coil spring 21 is made larger than the seating diameter *r2* of the second contact portion 79, so that a large gap is formed between the first contact portion 73 and the guide pin 19.

In addition, since the seating diameter *r1* is larger than the seating diameter *r2* of the second contact portion 79, intrusion of the coil spring 21 into the escape hole 67 can be prevented even if the escape hole 67 is enlarged in order to prevent the guide pin 19 from being contacted with the escape hole 67. Therefore, it is not required, for the prevention of the guide pin 19 from being contacted with the escape hole 67, to form the accommodation hole 61 with high accuracy, so that the escape hole 67 (accommodation hole 61) can be formed at low costs.

In addition, since formed is the radially-enlarged portion 80 whose outer diameter is gradually enlarged along a direction from the second contact portion 79 to the first contact portion 73 in the present embodiment, the seating diameter *r1* of the first contact portion 73 can be made larger than the seating diameter *r2* of the second contact portion 79 with a simple configuration.

### [Second Embodiment]

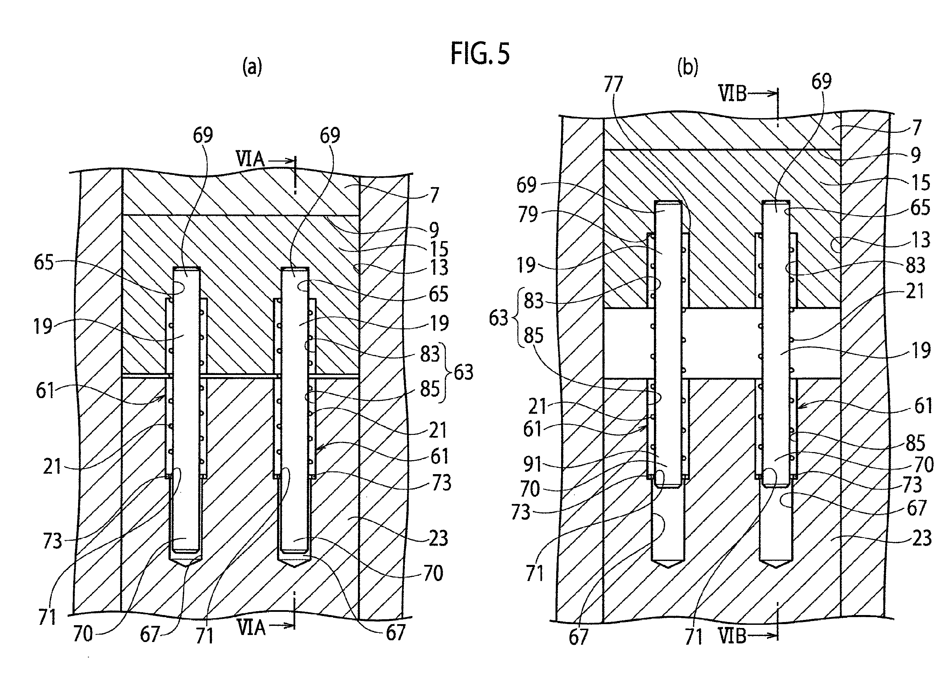

A second embodiment will be explained with reference to Fig. 5(a) to Fig. 6(b).

Also in the present embodiment, the vane(s) 15 reciprocates in the vane slot(s) 13 formed on the rotor main body 23, and its end is slidably contacted with the oval inner wall 9 of the cylinder chamber 17. In addition, coil springs 21 for urging the vane 15 toward the oval inner wall 9 of the cylinder chamber 17 are disposed between the bottom surface of the vane 15 and the bottom of the vane slot 13. Further, the guide pins (guide members) 19 for preventing the coil springs 21 from bending are inserted into the coil springs 21. The guide pin(s) 19 is longer than the expanding guide pin 19 (maximum length when installed), so that it can guide expansions and compressions of the coil spring 21 consistently.

In the present embodiment, the guide pin(s) 19 is fixed to the vane 15 by pressing the press-in end 69 of the guide pin 19 into the vane 15. The press-in portion(s) 65 into which the press-in end 69 is pressed is formed in the vane 15. The accommodation portion 63 for accommodating the guide pins 19 and the coil springs 21 is formed continuously with the press-in portion 65. The accommodation portion 63 includes a vane-side accommodation portion 83 formed on the vane 15, and a rotor-side accommodation portion 85 formed on the rotor main body 23. The accommodation hole 61 is formed of the press-in portion 65, the vane-side accommodation portion 83, the rotor-side accommodation portion 85 and an after-explained escape hole 67. An opposite end of the guide pin 19 to the press-in end 69 is the accommodated end 70 that is accommodated in the rotor-side accommodation portion 85.

An inner diameter of the press-in portion 65 is smaller than an inner width of the vane-side accommodation portion 83, and a step between an inner surface of the press-in portion 65 and an inner surface of the vane-side accommodation portion 83 is a second seat surface 77 that receives the other end of the coil spring 21. The other end of the coil spring 21 that is contacted with the second seat surface 77 is the second contact portion 79.

The escape hole(s) 67 is formed on the bottom of the vane slot 13 so as to communicate with the rotor-side accommodation portion 85. While the vane 15 reciprocates, the guide pin 19 is inserted-into and drawn-from the escape hole 67. An inner diameter of the escape hole 67 is smaller than an inner diameter of the rotor-side accommodation portion 85, and a step between an inner surface of the escape hole 67 and an inner surface of the rotor-side accommodation portion 85 is a first seat surface 71. The one end of the coil spring 21 that is contacted with the first seat surface 71 is the first contact portion 73.

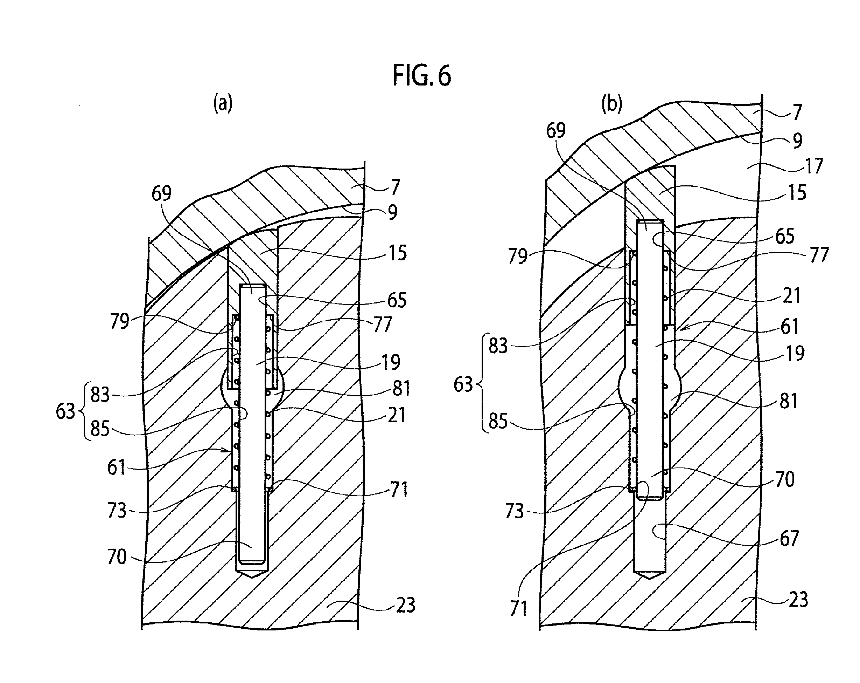

As shown in Fig. 6(a) and Fig. 6(b), the high-pressure refrigerant supply passage 81 is formed in the accommodation hole 61. High-pressure refrigerant supplied through the high-pressure refrigerant supply passage 81 is applied to the vane 15 as backpressure.

Also in the present embodiment, the inequality (b1-a)<(c-b2) is satisfied similarly to the above-explained first embodiment. From the satisfaction of this relation, serpentine flection of the coil spring 21 can be prevented even when the coil spring 21 bends and thereby an inner side of the coil spring 21 is contacted with an outer side of the guide pin 19. However, the coil spring 21 is not contacted with the inner surface of the accommodation portion 63 (accommodation hole 61), so that the coil spring 21 can expand smoothly and can be compressed smoothly.

Also in the present embodiment, similarly to the above-explained first embodiment (Fig. 4 (a) and Fig. 4(b)), the first contact portion 73 is formed at the one end of the coil spring 21, and the second contact portion 79 is formed at the other end. In addition, also formed is the radially-enlarged portion 80 whose outer diameter is gradually enlarged along a direction from the second contact portion 79 to the first contact portion 73. Therefore, since the seating diameter *r1* of the first contact portion 73 is larger than the seating diameter *r2* of the second contact portion 79 (r1>r2), intrusion of the coil spring 21 into the escape hole 67 can be prevented even if the escape hole 67 is enlarged in order to prevent the guide pin 19 from being contacted with the escape hole 67.

Also in the present embodiment, the rotor shaft 41 of the vane compressor 3 rotates when the motor shaft 53 of the electrical motor 5 is rotated, so that the rotor main body 23 rotates in the cylinder chamber 17. The vane(s) 15 is urged toward the oval inner wall 9 of the cylinder chamber 17 by the coil springs 21, and thereby reciprocated while contacting its end with the oval inner wall 9. Refrigerant is compressed by volume change of the compression chamber between the neighboring vanes 15. When the refrigerant is compressed, the high-pressure refrigerant is supplied into the accommodation hole 61 (vane slot 13) via the high-pressure refrigerant supply passage 81. After the supply of the high-pressure refrigerant, the vane(s) 15 is urged toward the oval inner wall 9 also by backpressure caused by the high-pressure refrigerant in addition to the spring forces of the coil springs 21. Therefore, chattering can be prevented even at a compression start time when the backpressure caused by the high-pressure refrigerant is not applied, because the spring forces of the coil springs 21 are applied to the vane 15.

Also in the present embodiment, the seating diameter *r1* of the first contact portion 73 of the coil spring 21 is made larger than the seating diameter *r2* of the second contact portion 79, so that a large gap is formed between the first contact portion 73 and the guide pin 19.

In addition, since the seating diameter *r1* is larger than the seating diameter *r2* of the second contact portion 79, intrusion of the coil spring 21 into the escape hole 67 can be prevented even if the escape hole 67 is enlarged in order to prevent the guide pin 19 from being contacted with the escape hole 67. In addition, it is not required, for the prevention of the guide pin 19 from being contacted with the escape hole 67, to form the accommodation hole 61 with high accuracy. In addition, since it is not needed to improve accuracy of the escape hole 67 (accommodation hole 61), the escape hole 67 (accommodation hole 61) can be formed at low costs.

In addition, since formed is the radially-enlarged portion 80 whose outer diameter is gradually enlarged along a direction from the second contact portion 79 to the first contact portion 73 in the present embodiment, the seating diameter *r1* of the first contact portion 73 can be made larger than the seating diameter *r2* of the second contact portion 79 with a simple configuration.

### [Third Embodiment]

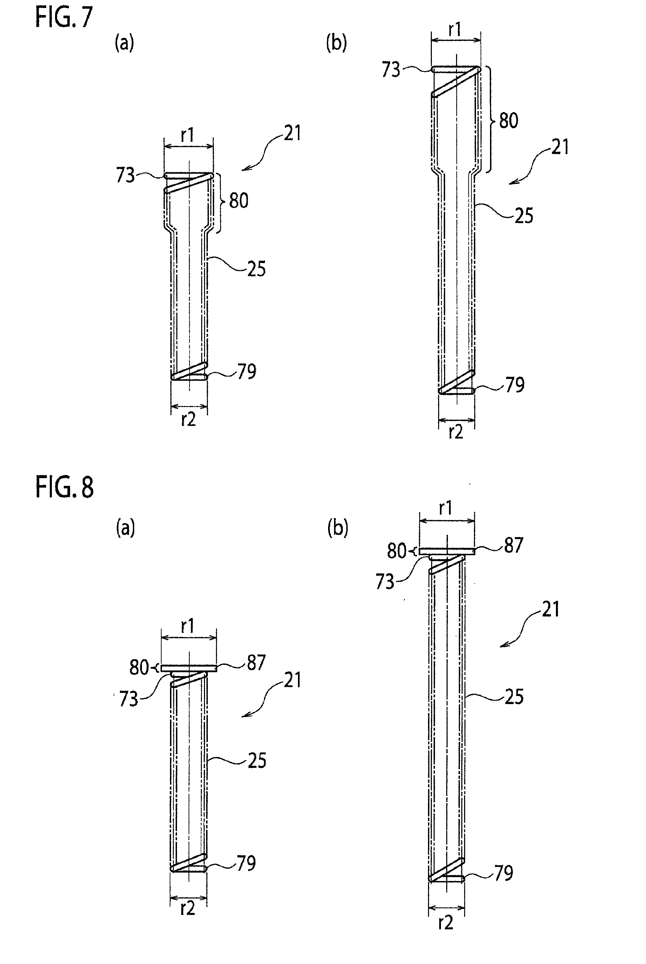

A third embodiment will be explained with reference to Fig. 7(a) and Fig. 7(b). The present embodiment is different from the above-explained first or second embodiment only in respect to the coil spring(s) 21. Therefore, explanations for other configurations (configurations identical to those in the first embodiment or the second embodiment) will be omitted, and only the coil spring 21 will be explained.

As shown in Fig. 7(a) and Fig. 7(b), with respect to the coil spring (s) 21 in the present embodiment, the radially-enlarged portion 80 on a side of the first contact portion 73 has a constant outer diameter *r1*, and a coiled portion 25 on a side of the second contact portion *r2* has a constant outer diameter *r2* smaller than the above outer diameter *r1.* Therefore, the seating diameter *r1* of the first contact portion 73 on a side of the accommodated end 70 of the guide pin 19 is larger than the seating diameter *r2* of the second contact portion 79 on a side of the press-in end 69 of the guide pin 19 (r1>r2). Note that the radially-enlarged portion 80 in the present embodiment is not gradually radially-enlarged as in the first embodiment, but has the constant outer diameter as explained above.

Since the seating diameter *r1* of the first contact portion 73 is larger than the seating diameter *r2* of the second contact portion 79, intrusion of the coil spring 21 into the escape hole 67 can be prevented even if the escape hole 67 is enlarged in order to prevent the guide pin 19 from being contacted with the escape hole 67. According also to the coil spring 21 in the present embodiment, the seating diameter *r1* of the first contact portion 73 can be made larger than the seating diameter *r2* of the second contact portion 79 with a simple configuration.

### [Fourth Embodiment]

A fourth embodiment will be explained with reference to Fig. 8(a) and Fig. 8(b). The present embodiment is different from the above-explained first or second embodiment only in respect to the coil spring(s) 21. Therefore, explanations for other configurations (configurations identical to those in the first embodiment or the second embodiment) will be omitted, and only the coil spring 21 will be explained.

As shown in Fig. 8 (a) and Fig. 8(b), the coil spring(s) 21 in the present embodiment has, as itself, a constant outer diameter *r2* along its entire length. However, the contact portion 73 has a washer 87 that can function as the radially-enlarged portion 80. An outer diameter *r1* of the washer 87 is larger than the outer diameter *r2* of the coil spring 21 itself, and the washer 87 is contacted with the first seat surface 71 of the vane 15 (Fig. 2: the configuration in the first embodiment) or the first seat surface 71 of the rotor main body 23 (Fig. 5(a) to Fig. 6(b): the configuration in the second embodiment). Note that the washer 87 may be fixed to the first contact portion 73, or may be held between the first contact portion 73 and the first seat surface 71 by a spring force of the coil spring 21 after installation without being fixed to the first contact portion 73.

According also to the above-explained configuration in which the first contact portion 73 has the washer 87 and thereby the first contact portion 73 has the seating diameter *r1*, intrusion of the coil spring 21 into the escape hole 67 can be prevented even if the escape hole 67 is enlarged in order to prevent the guide pin 19 from being contacted with the escape hole 67. Therefore, according also to the coil spring 21 in the present embodiment, the seating diameter *r1* of the first contact portion 73 can be made larger than the seating diameter *r2* of the second contact portion 79 with a simple configuration. According to the present embodiment, other equivalent advantages by the above-explained first to third embodiments can be obtained.

### [Fifth Embodiment]

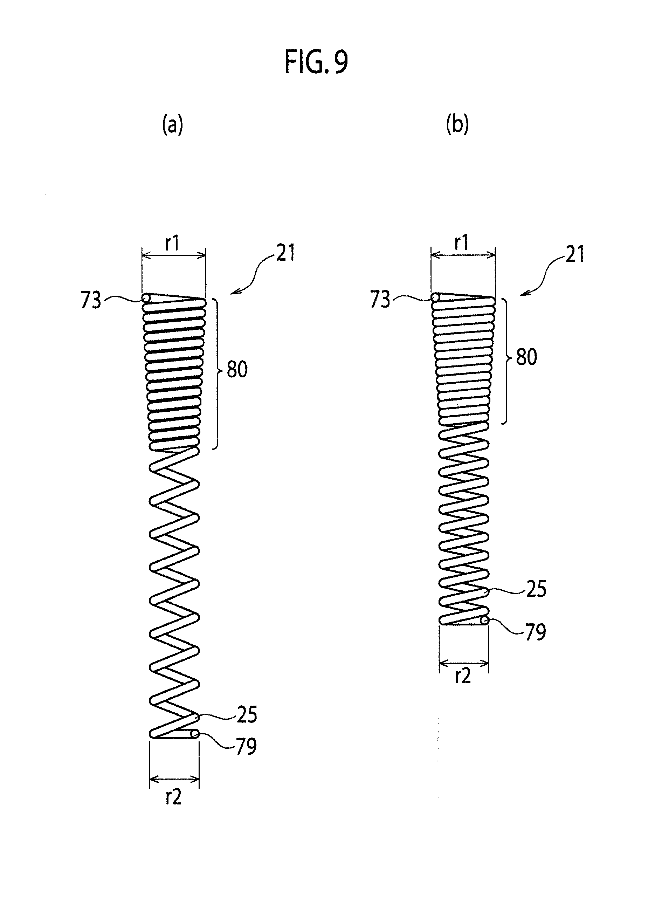

A fifth embodiment will be explained with reference to Fig. 9(a) and Fig. 9(b). The present embodiment is different from the above-explained first or second embodiment only in respect to the coil spring(s) 21. Therefore, explanations for other configurations (configurations identical to those in the first embodiment or the second embodiment) will be omitted, and only the coil spring 21 will be explained.

As shown in Fig. 9(a) and Fig. 9(b), similarly to the first embodiment, with respect to the coil spring(s) 21 in the present embodiment, formed is the radially-enlarged portion 80 whose outer diameter is gradually enlarged along a direction from the second contact portion 79 to the first contact portion 73. The first contact portion 73 is formed at a free end of the radially-enlarged portion 80. Namely, in the coil spring 21, formed is the radially-enlarged portion 80 whose outer diameter is gradually enlarged along a direction from the press-in end 69 to the accommodated end 70 of the guide pin 19. Therefore, the seating diameter *r1* of the first contact portion 73 on a side of the accommodated end 70 of the guide pin 19 is larger than the seating diameter *r2* of the second contact portion 79 on a side of the press-in end 69 of the guide pin 19 (r1>r2).

Further, with respect to the coil spring(s) 21 in the present embodiment, the number of active coils in the radially-enlarged portion 80 is set so that shear stress of the radially-enlarged portion 80 is made equivalent to shear stress of the coiled portion 25 other than the radially-enlarged portion 80. In addition, pitch of the radially-enlarged portion 80 is smaller than pitch of the coiled portion 25, so that the coil spring(s) 21 in the present embodiment is a variable pitch spring.

Therefore, when the coil spring 21 is compressed, the coiled portion 25 is compressed without using its pitch all up as shown in Fig. 9(b), but the radially-enlarged portion 80 gets into a coil bind state by using its pitch all up. Although higher shear stress may be generated in the radially-enlarged portion 80 than in the coiled portion 25 in a case where pitch of the radially-enlarged portion 80 is made identical to pitch of the coiled portion 25, shear stress of the radially-enlarged portion 80 can be decreased due to the above configuration. As a result, the radially-enlarged portion 80 can be prevented from being damaged and lifetime of the coiled portion 25 can be prolonged.

According also to this configuration, intrusion of the coil spring 21 into the escape hole 67 can be prevented even if the escape hole 67 is enlarged in order to prevent the guide pin 19 from being contacted with the escape hole 67. Therefore, it is not needed, for the prevention of the guide pin 19 from being contacted with the escape hole 67, to form the accommodation hole 61 with high accuracy, so that the escape hole 67 (accommodation hole 61) can be formed at low costs.

In addition, since formed is the radially-enlarged portion 80 whose outer diameter is gradually enlarged along a direction from the second contact portion 79 to the first contact portion 73 in the present embodiment, the seating diameter *r1* of the first contact portion 73 can be made larger than the seating diameter *r2* of the second contact portion 79 with a simple configuration. According to the present embodiment, other equivalent advantages by the above-explained first to third embodiments can be also obtained.

### [Sixth Embodiment]

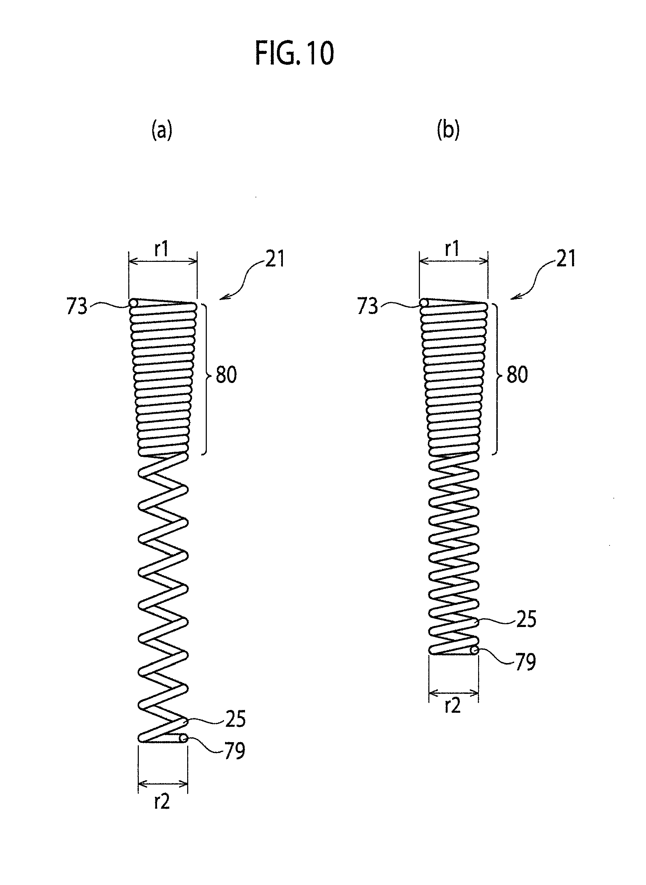

A sixth embodiment will be explained with reference to Fig. 10 (a) and Fig. 10(b). The present embodiment is different from the above-explained first or second embodiment only in respect to the coil spring (s) 21. Therefore, explanations for other configurations (configurations identical to those in the first embodiment or the second embodiment) will be omitted, and only the coil spring 21 will be explained.

As shown in Fig. 10(a) and Fig. 10(b), similarly to the first embodiment, the coil spring(s) 21 in the present embodiment has an almost identical shape to a shape of the coil spring 21 in the above-explained fifth embodiment, it is a variable pitch spring having the radially-enlarged portion 80 whose outer diameter is gradually enlarged. However, with respect to the coil spring 21 in the present embodiment, coils in the radially-enlarged portion 80 are contacted with each other when the coil spring 21 is installed (or, in its free-length state). Namely, pitch of the radially-enlarged portion 80 is smaller than pitch of the coiled portion 25, i.e. set to minimum pitch (=0).

Although higher shear stress may be generated in the radially-enlarged portion 80 than in the coiled portion 25 in a case where pitch of the radially-enlarged portion 80 is made identical to pitch of the coiled portion 25, shear stress of the radially-enlarged portion 80 can be decreased by contacting the coils in the radially-enlarged portion 80 with each other. Therefore, the radially-enlarged portion 80 can be prevented from being damaged and lifetime of the coiled portion 25 can be prolonged. For example, in a case where the coils in the radially-enlarged portion 80 are contacted with each other in its free-length state, shear stress of the radially-enlarged portion 80 becomes zero.

According also to this configuration, intrusion of the coil spring 21 into the escape hole 67 can be prevented even if the escape hole 67 is enlarged in order to prevent the guide pin 19 from being contacted with the escape hole 67. Therefore, it is not needed, for the prevention of the guide pin 19 from being contacted with the escape hole 67, to form the accommodation hole 61 with high accuracy, so that the escape hole 67 (accommodation hole 61) can be formed at low costs.

In addition, since formed is the radially-enlarged portion 80 whose outer diameter is gradually enlarged along a direction from the second contact portion 79 to the first contact portion 73 in the present embodiment, the seating diameter *r1* of the first contact portion 73 can be made larger than the seating diameter *r2* of the second contact portion 79 with a simple configuration. According to the present embodiment, other equivalent advantages by the above-explained first to third embodiments can be also obtained.

Note that the present invention can arbitrarily combine the above-explained embodiments. For example, with respect to the coil spring, it is possible that the radially-enlarged portion whose outer diameter is gradually enlarged along a direction from the second contact portion to the first contact portion and the first contact portion that is a free end of the radially-enlarged portion has the washer having a larger diameter than that of the radially-enlarged portion. Further, coils in the above radially-enlarged portion may be contacted with each other. According also to this configuration, equivalent advantages by the above-explained embodiments can be obtained.

In addition, the first contact portion 73 of the coil spring (s) 21 in the above embodiments other than the fourth embodiments may have the washer 87 shown in Fig. 8 (a) and Fig. 8(b).

In addition, the present invention is not limited to the above embodiments and can be variably modified. For example, the vane compressor according to the present invention may be used in a Limited-Slip Differential in a power train for a vehicle that uses high-viscous oil as working fluid, other than the above cooling system. In addition, a drive source for the vane compressor according to the present invention may be an internal combustion whose output power is transmitted by a pulley(s) and a belt(s).

## Claims

1. A vane compressor comprising:
a cylinder block in which a cylinder chamber having an oval inner wall on an inner surface thereof is formed; and
a rotor rotatably provided in the cylinder chamber, wherein
the rotor includes
a rotor main body that rotates in the cylinder chamber,
a plurality of vanes whose base ends are supported by a plurality of vane slots formed in the rotor main body and that are provided so as to be able to protrude from the rotor main body,
coil springs disposed between bottoms of the vane slots and the vanes to urge the vanes toward the oval inner wall, and
guide members each of which has a press-in end that is pressed into a bottom of one of the vane and the vane slot and an accommodated end that is to be accommodated in an escape hole provided on a bottom of another of the vane and the vane slot, and is inserted into the coil spring to prevent the coil spring from bending,
when an outer diameter of the guide member is denoted by *a*, an inner diameter of the coil spring is denoted by *b1*, an outer diameter of the coil spring is denoted by b2, and an inner diameter or an inner width of an accommodation portion for the coil spring is denoted by c, an inequality (b1-a)<(c-b2) is satisfied, and
a first seating diameter of a first contact portion at an end of the coil spring on a side of the accommodated end is larger than a second seating diameter of a second contact portion at another end of the coil spring on a side of the press-in end.

2. The vane compressor according to claim 1, wherein
an outer diameter of the first contact portion is larger than an outer diameter of the second contact portion.

3. The vane compressor according to claim 2, wherein
the coil spring has a radially-enlarged portion whose outer diameter is gradually enlarged along a direction from the second contact portion to the first contact portion.

4. The vane compressor according to claim 3, wherein
the number of active coils in the radially-enlarged portion is set so that shear stress of the radially-enlarged portion of the coil spring is made equivalent-to or smaller-than shear stress of a coiled portion that is a portion of the coil spring other than the radially-enlarged portion.

5. The vane compressor according to claim 3 or 4, wherein
pitch of the radially-enlarged portion is smaller than pitch of the coiled portion.

6. The vane compressor according to any one of claims 3 to 5, wherein
coils in the radially-enlarged portion are contacted with each other.

7. The vane compressor according to any one of claims 1 to 6, wherein
the first contact portion has a washer, and
an outer diameter of the washer is the seating diameter.
